# EUROPEAN PATENT APPLICATION

(11) **EP 0 687 407 A1**
(43) Date of publication of application: **20.12.1995**
(21) Application number: 95201499.1
(22) Date of filing: 07.06.1995
(51) Int. Cl.: A01D 34/70

(54) **Device for detecting the condition of a full bag in a lawn mower machine with a bag for collecting cut grass**

(30) Priority: 15.06.1994 IT MI940430 U
(71) Applicant: CASTELGARDEN S.P.A., I-31033 Castelfranco Veneto (Treviso ) (IT)
(72) Inventor: Ferrari, Maurizio, I-20144 Milano (IT)
(74) Representative: Mittler, Enrico

(57) **Abstract**

The device comprises an opening (10) placed substantially at the inlet of the collection bag (8) to allow the surplus grass to leave the collection bag when the latter is reaching the condition of full bag. A sensing element (11, 12) is connected to said opening (10) to detect discharge of the grass and actuate a generator (13, 14, 15) of warning signals.

## Description

The present invention relates to a device for detecting the condition of full bag in a lawn mower machine with a bag for collecting the cut gass.

Present lawn mower machines, be they of the type with the driver standing or with the driver seated (so-called "mini tractors"), are based on the presence of at least one cutting blade, made to rotate around a vertical axis inside an appropriately shaped cutting plate which conveys the cut grass towards a lateral or rear discharge mouth.

In top quality lawn mower machines the discharge mouth is connected to a bag for collecting grass, placed on the back of the machine.

When the collection bag is full, it naturally has to be removed from the machine and emptied, so as to prevent the grass falling immediately to the ground from the cutting plate and the machine subsequently seizing and breaking down.

It is therefore important to be aware of the condition of full bag at the right time, in order to avoid removing the bag too frequently or after the aforementioned problems have occurred.

For this purpose collection bags are provided having small windows in a transparent material on the cover, through which it is possible to inspect the interior of the bag without however knowing whether the bag has reached the maximum degree of filling foreseen for the special conditions of use (dry, wet, long, short grass, higher or lower forward speed, cutting height etc.). Furthermore, after a certain degree of filling, these windows become soiled (with grass or dust) and are therefore totally useless.

In view of this state of the art, the object of the present invention has been that of providing a device which can be used in any type of lawn mower machine with a collection bag to detect the condition of full bag efficiently and reliably.

In accordance with the invention this object has been achieved with a device characterised in that it comprises an opening placed substantially at the inlet of the collection bag to allow the surplus grass to be discharged from the collection bag when the latter is reaching the condition of full bag, a sensing element connected to said opening to detect said discharge of grass and a generator of warning signals actuated by said sensing element.

With the device according to the invention, detection of the condition of full bag no longer depends on the state of cleanliness of a transparent window but is instead performed automatically by a sensing element (such as a microswitch for example) which senses the discharge of the grass from an overflow opening and then commands generation of warning signals for the driver of the machine. At this stage the driver can empty the bag and replace it before the grass collection system becomes clogged.

The features of the present invention will be made clearer from the following detailed description of one of its embodiments illustrated by way of a non-limiting example in the accompanying drawings, in which:
Fig. 1 shows schematically in a lateral view a lawn mower machine with the driver seated, whereto, by way of an example, a detector element is connected according to the present invention;
Fig. 2 shows on an enlarged scale the assembly which consists of the cutting unit, the channel for conveying the grass and the collection bag, the latter fitted with a device for detecting the full bag according to the present invention;
Fig. 3 shows on a further enlarged scale the abovementioned detection device;
Fig. 4 shows the basic wiring diagram of a detection device according to the invention.

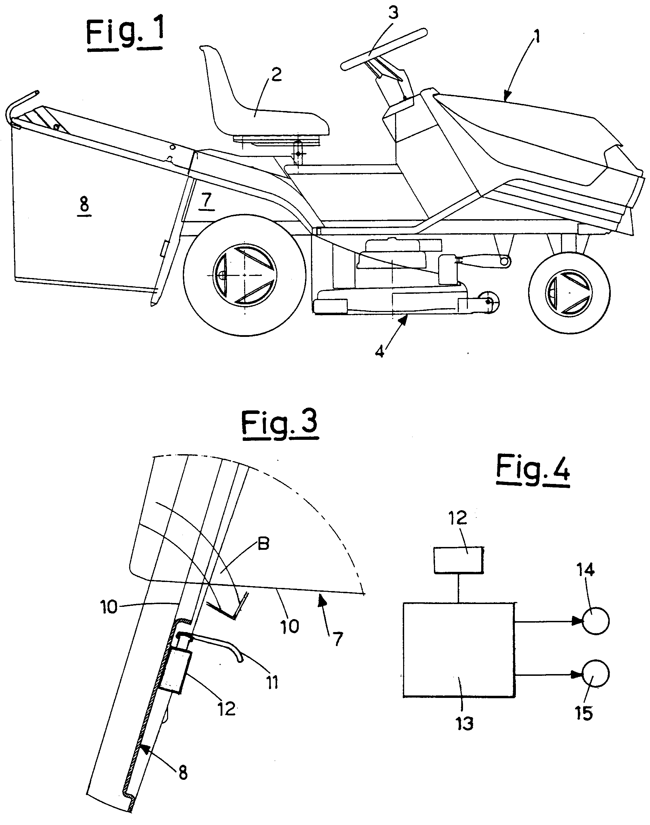

Fig. 1 schematically represents a lawn mower machine which, purely by way of an example, is of the type with a seated driver, it remaining understood however that the device according to the present invention can also be applied irrespectively also to any type of lawn mower with a standing driver.

In the example considered the lawn mower machine comprises a motorised vehicle with four wheels, denoted as a whole by reference numeral 1 and provided with a seat 2 and steering wheel 3.

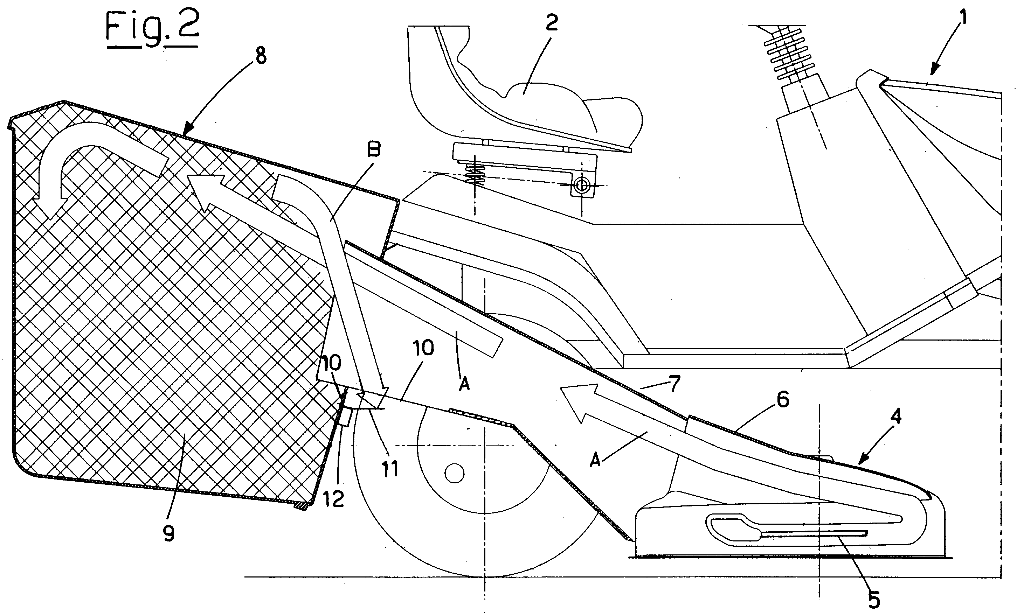

A cutting assembly 4 is positioned in the lower part of the vehicle, comprising (Fig. 2) at least one cutting blade 5, rotating around a vertical axis, and a cutting plate 6 above, which, through a conveying channel 7, directs the cut grass towards a collection bag 8 behind, where it is deposited in the manner represented by 9 in Fig. 2. The route of the cut grass is indicated by arrows A in Fig. 2.

As shown in Figures 2 and 3, the front wall of the bag 8 and the nearby lower wall of the conveying channel 7 have an opening 10, through which the surplus cut grass can fall outside of the bag, as shown by arrows B in Figures 2 and 3.

Just below the opening 10, outside of the bag 8, a lever 11 is positioned which is able to sense the discharge of the grass and consequently cause actuation of a microswitch 12 attached to the front wall of the bag 8 (Figure 3).

The microswitch 12 forms the command element of an electric generator 13 (Fig. 4), which commands in turn suitable optical and acoustic indicators 14 and 15.

The mode of functioning of the full bag detection device described above is immediately clear.

When the degree of filling of the bag 8, for whatsoever condition of cutting of the grass, reaches the level determined by the opening 10, or in any case when the bag for whatsoever reason is not able to receive the cut grass, the grass starts to fall outside of the bag. The lever 11 senses the falling of the grass and, by means of the microswitch 12, determines generation of warning signals for the driver of the machine.

These signals are first intermittent and later continuous, so that the driver can become aware of the situation and have time to take action before the conveying channel 7 becomes clogged, or even worse problems occur.

## Claims

1. Device for detecting the condition of full bag in a lawn mower machine with a bag for collecting the cut grass, characterised in that it comprises an opening (10) placed substantially at the inlet of the collection bag to allow discharge of the surplus grass from the collection bag when the latter is reaching the condition of full bag, a sensing element (11, 12) connected to said opening (10) to detect said discharge of grass and a generator (13, 14, 15) of warning signals actuated by said sensing element (11, 12).

2. Device according to claim 1, characterised in that said sensing element (11, 12) consists of a lever (11) for actuating a microswitch (12).

3. Device according to claim 2, characterised in that said generator (13, 14, 15) of warning signals comprises an electric generator (13) and indication means (14, 15) commanded by said generator (13).
